# EUROPEAN PATENT APPLICATION

(11) **EP 4 765 401 A1**
(43) Date of publication of application: **24.06.2026**
(21) Application number: 24944348.2
(22) Date of filing: 15.11.2024
(51) Int. Cl.: H01M 50/258, H01M 50/262, H01M 50/244, H01M 50/249, H01M 50/204

(54) **MULTI-LAYER STACKED BATTERY PACK AND VEHICLE**

(30) Priority: 28.06.2024 CN 202410865203; 28.06.2024 CN 202421520331 U
(71) Applicant: Eve Energy Co., Ltd., Huizhou, Guangdong 516006 (CN)
(72) Inventor: ZHANG, Minglang, Huizhou, Guangdong 516006 (CN); CHEN, Jiaben, Huizhou, Guangdong 516006 (CN)
(74) Representative: Zhu, Puxing
(86) International application number: PCT/CN2024/132410
(87) International publication number: WO 2026/000781

(57) **Abstract**

The present disclosure provides a multi-layer stacked battery pack and a vehicle. The battery pack includes: a single-layer module, where the single-layer module includes a frame and a battery module, the frame includes an edge frame and a bottom plate, the undersides of both are connected to enclose a battery chamber that accommodates the battery module; and an upper cover; where a plurality of single-layer modules are stacked along a height direction, the bottom plate of an upper single-layer module of the single-layer modules is connected to the edge frame of an lower single-layer module of the single-layer modules, among adjacent two of the single-layer modules, to close the battery chamber, and the upper cover is connected to the edge frame of a top single-layer module of the single-layer modules.

## Description

This disclosure claims priority to Chinese Patent Applications No. 2024215203313 and No. 2024108652030, filed on June 28, 2024 with the China National Intellectual Property Administration, the entire contents of which are incorporated herein by reference.

### TECHNICAL FIELD

The present disclosure relates to the field of battery technology, particularly to a multi-layer stacked battery pack and vehicle.

### BACKGROUND

Electric vehicles mainly use electricity to provide a driving force. To improve endurance, the volume of the battery pack often needs to be relatively large when the battery energy density is limited. But the battery pack with a large volume will affect the overall size of the vehicle body.

### TECHNICAL PROBLEM TO BE SOLVED

The battery pack of related technology requires an additional outer frame, which takes up a lot of space. As a result, it cannot fit more batteries in the limited space of the vehicle body and therefore cannot provide more power. Moreover, this type of battery pack has a variety of structural components and high cost.

### SUMMARY

This disclosure provides a multi-layer stacked battery pack, comprising:
a plurality of single-layer modules, wherein each of the single-layer modules comprises a frame and a battery module, the frame comprises an edge frame and a bottom plate, the bottom plate is connected to underside of the edge frame, and the edge frame and the bottom plate enclose a battery chamber that accommodates the battery module; and
an upper cover;
wherein the plurality of single-layer modules are stacked along a height direction, the bottom plate of an upper single-layer module of the single-layer modules is connected to the edge frame of a lower single-layer module of the single-layer modules, among adjacent two of the single-layer modules, to close the battery chamber, and the upper cover is connected to the edge frame of a top single-layer module of the single-layer modules.

### BENEFICIAL EFFECTS

The beneficial effects of the multi-layer stacked battery pack and vehicle provided by the present disclosure are as follows. The battery pack includes a plurality of single-layer modules and an upper cover, the plurality of single-layer modules are stacked along the height direction, and the bottom plate of an upper single-layer module of the single-layer modules is connected to the edge frame of a lower single-layer module of the single-layer modules to enclose the battery chamber, that is, the upper single-layer module is used to enclose the battery chamber of the lower single-layer module. The single-layer modules can be stacked and connected without the need for an additional outer frame to fix the plurality of single-layer modules, simplifying the structure and reducing the overall volume of the battery pack, thereby saving occupied space. It is particularly suitable for scenarios where the occupied space by battery is limited, such as electric vehicles, electric bicycles, and other devices that use batteries as power sources.

### BRIEF DESCRIPTION OF THE DRAWINGS

Fig. 1 is a schematic diagram of a three-dimensional structure of a battery pack according to some embodiments of the present disclosure;
Fig. 2 is an exploded diagram of a battery pack according to some embodiments of the present disclosure;
Fig. 3 is an exploded diagram of a single-layer module according to some embodiments of the present disclosure;
Fig. 4 is an exploded diagram of a frame according to some embodiments of the present disclosure;
Fig. 5 is a schematic diagram of a structure of one of edge beams according to some embodiments of the present disclosure;
Fig. 6 is a sectional view of two stacked single-layer modules at the bottom according to some embodiments of the present disclosure;
Fig. 7 is an enlarged view of region A in Fig. 6;
Fig. 8 is a schematic diagram of a three-dimensional structure of a single-layer module when viewed from a front end according to some embodiments of the present disclosure;
Fig. 9 is a schematic diagram of a three-dimensional structure of a single-layer module when viewed from a back end according to some embodiments of the present disclosure;
Fig. 10 is a principal diagram of a liquid cooling solution for a single-layer module according to some embodiments of the present disclosure;
Fig. 11 is a structural schematic diagram of a vehicle according to some embodiments of the present disclosure.

### List of reference signs:

Battery pack 100, Single-layer module 10, Frame 11, Edge frame 111, Edge beam 1111, End beam 1112, Upper flange 1113, Vertical reinforcement rib 11131, Lower flange 1114, First mounting hole 1115, Second mounting hole 1116, Groove 1117, Vertical rib 1118, Transverse reinforcement rib 11181, Transverse rib 1119, Bottom plate 112, Thermal conductive adhesive 113, Anti-expansion beam 114, Anti-expansion reinforcement rib 1141, Sealing foam 115, Connecting screw 116, Nut piece 117, Screw bushing 118, Battery module 12, Battery cell 121, Upper cover 20, First coolant chamber 31, Second left coolant chamber 32, Second right coolant chamber 33, Third left coolant chamber 34, Third right coolant chamber 35, Fourth coolant chamber 36, First partition rib 41, Second partition rib 42, First channel 51, Second channel 52, Third channel 53, Fourth channel 54, Fifth channel 55, First sealing rib 61, Second sealing rib 62, Third sealing rib 63, Fourth sealing rib 64, Fifth sealing rib 65, Sixth sealing rib 66, Seventh sealing rib 67, Inlet port 81, Outlet port 82.

### DETAILED DESCRIPTION

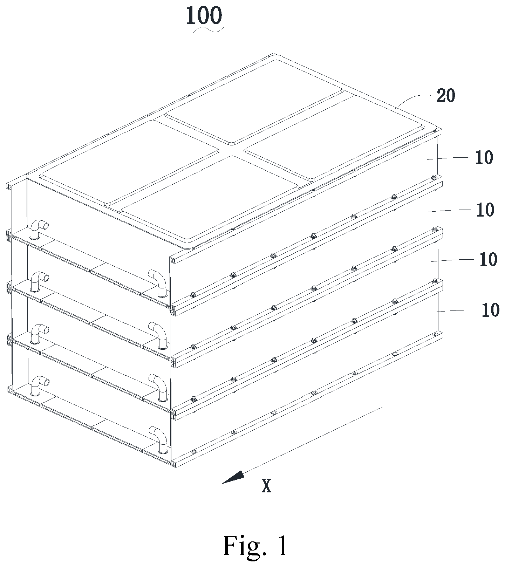

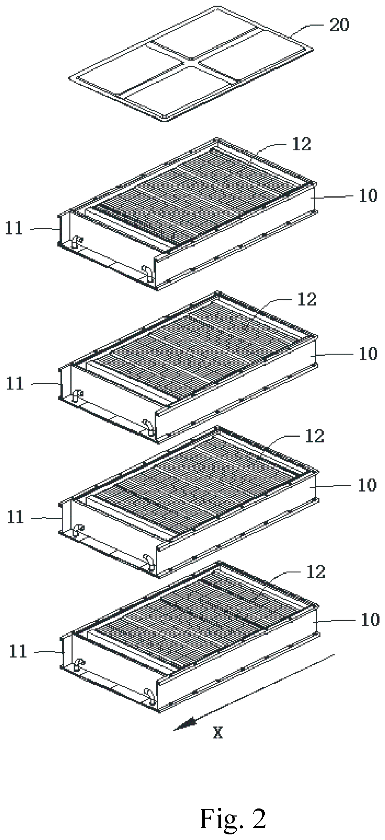

Please refer to Figs. 1 to 3. The multi-layer stacked battery pack 100 of the present embodiments includes a plurality of single-layer modules 10 and an upper cover 20.

Each of the single-layer modules 10 includes a frame 11 and a battery module 12. The frame 11 includes an edge frame 111 and a bottom plate 112. The bottom plate 112 is connected to the underside of the frame 111, and the edge frame 111 and the bottom plate 112 enclose a battery chamber 122 that accommodates the battery module 12. The plurality of the single-layer modules 10 are stacked along a height direction. The bottom plate 112 of an upper single-layer module of the single-layer modules 10 is connected to an upper part of the edge frame 111 of a lower single-layer module of the single-layer modules 10, among adjacent two of the single-layer modules 10, to close the battery chamber 122. The upper cover 20 is connected to the upper part of the edge frame 111 of a top single-layer module of the single-layer modules 10.

In the embodiments, the battery pack 100 includes a plurality of single-layer modules 10 and an upper cover 20. The plurality of single-layer modules 10 are stacked along the height direction, the bottom plate 112 of an upper single-layer module of the single-layer modules 10 is connected to the edge frame 111 of a lower single-layer module of the single-layer modules 10 to enclose the battery chamber 122. That is, the upper single-layer module 10 is used to close the battery chamber 122 of the lower single-layer module 10. The single-layer modules 10 can be stacked and connected without the need for an additional outer frame to fix the plurality of the single-layer modules 10, simplifying the structure and reducing the overall volume of the battery pack 100, thereby saving occupied space. It is particularly suitable for scenarios where the occupied space by the battery is limited, such as electric vehicles, electric bicycles, and other devices that use batteries as power sources.

The number of the single-layer modules 10 included in the battery pack 100 can be two, three, or more. As shown in Figs. 1 to 2, the number of the single-layer modules 10 is four.

The upper cover 20 is connected to the single-layer module 10 on top to close the battery chamber 122 of the single-layer module 10. The upper cover 20 can be made of non-metallic materials, such as plastic.

Among the adjacent two single-layer modules 10, the frame 11 of the upper single-layer module 10 is detachably connected to the frame 11 of the lower single-layer module 10. Therefore, when the battery pack 100 malfunctions, it can facilitate the disassembly of the single-layer module 10 for ease of the maintenance of the faulty single-layer module 10. The detachable connection method can be a screw connection or clamp connection, for example. In other examples, the bottom plate 112 of the upper single-layer module 10 is detachably connected to the edge frame 111 of the lower single-layer module 10.

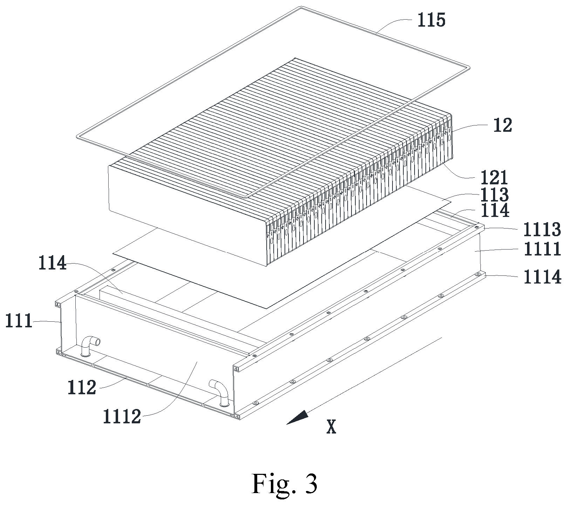

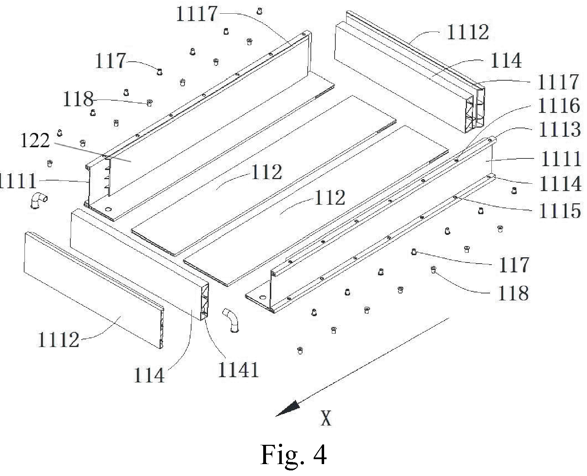

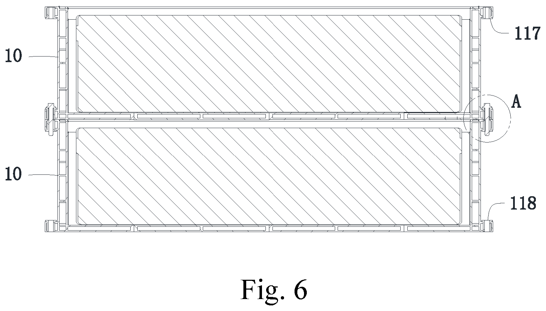

Please refer to Figs. 3 and 4. The lower part of the edge frame 111 is provided with a lower flange 1114, which has a first mounting hole 1115. The upper part of the edge frame 111 is provided with an upper flange 1113, which has a second mounting hole 1116. The first mounting hole 1115 is aligned with the second mounting hole 1116. The first mounting hole 1115 and the second mounting hole 1116 can both be screw through holes or rivet through holes, or either of them can be a threaded hole. When assembling, please refer to Figs. 6 to 7, the connector (such as the connecting screw 116 or rivet) passes through the first mounting hole 1115 of the edge frame 111 of the upper single-layer module 10 and then is connected to the second mounting hole 1116 of the edge frame 111 of the lower single-layer module 10.

The battery pack 100 also includes a connecting screw 116 and a nut piece 117.

In some examples, the connecting screw 116 continuously passes through the first mounting hole 1115 of the edge frame 111 of the upper single-layer module and the second mounting hole 1116 of the edge frame 111 of the lower single-layer module and is then connected to the nut piece 117. Thus, after stacking two single-layer modules 10 together, they are connected using the connecting screw 116 and the nut piece 117. The number of the first mounting holes 1115, the second mounting holes 1116, the connecting screws 116, and the nut pieces 117 corresponds one-to-one, and can be multiple. They are arranged along a length direction X on both sides of the edge frame 111, evenly distributed.

In other examples, the upper flange 1113 is provided with a threaded hole (not shown), and the first mounting hole 1115 is aligned with the threaded hole. The connecting screw 116 passes through the first mounting hole 1115 of the edge frame 111 of the upper single-layer module and is then connected to the threaded hole of the edge frame 111 of the lower single-layer module. Thus, after stacking two single-layer modules 10 together, they are connected using the connecting screw 116. The number of the first mounting holes 1115, the threaded holes and the connecting screws 116 corresponds one-to-one and can be multiple. They are arranged along the length direction X on both sides of the edge frame 111, evenly distributed.

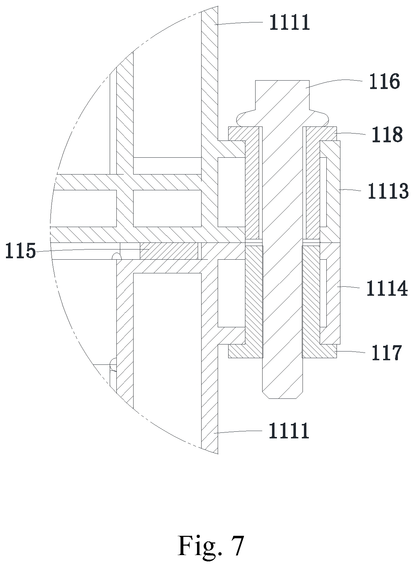

Please continue to refer to Figs. 6 and 7. The nut piece 117 can be a sleeve with a flange end. The sleeve is inserted into the second mounting hole 1116. The flange end of the sleeve abuts against the underside of the upper flange 1113. There are threads inside the sleeve. The connecting screw 116 passes through the first mounting hole 1115 of the edge frame 111 of the upper single-layer module and is then connected to the threads inside the sleeve.

To improve the connection strength, a screw bushing 118 can also be provided in the first mounting hole 1115. The screw bushing 118 is inserted into the first mounting hole 1115, and the connecting screw 116 passes through the screw bushing 118 and is then connected to the nut piece 117.

After connecting the plurality of single-layer modules 10 together as a battery pack 100, it is necessary to mount the battery pack 100 onto a mounting base using a mounting screw. The mounting base can be a chassis of a vehicle or a casing of a certain device. The first mounting hole 1115 of the edge frame 111 of a lowest single-layer module of single-layer modules is also configured for the mounting screw connected to the mounting base to pass through. Therefore, the edge frame 111 of the lowest single-layer module does not require providing of the additional mounting hole but is connected to the mounting base through the first mounting hole 1115, greatly simplifying the structure of the edge frame 111 and reducing costs.

The following introduces the structure of single-layer module 10.

Please refer to Figs. 3 and 4 again. The single-layer module 10 includes a frame 11 and a battery module 12. The frame 11 includes an edge frame 111 and a bottom plate 112. The bottom plate 112 is connected to the underside of the edge frame 111, and the edge frame 111 and the bottom plate 112 enclose a battery chamber 122 that accommodates the battery module 12. The bottom plate 112 is connected to the underside of the edge frame 111, so that the edge frame 11 has a box shape with an open top. The bottom plate 112 can be composed of a plurality of plates. When assembling, a thermal conductive adhesive 113 is first applied on the underside of the battery chamber 122, then the battery module 12 is placed into the battery chamber 122 and fixed. The thermal conductive adhesive 113 can transfer the heat generated by the battery module 12 to the bottom plate 112 to improve heat dissipation efficiency. The thickness of the thermal conductive adhesive 113 can be 1 millimeter.

The edge frame 111 includes two edge beams 1111 that are opposite to each other and two end beams 1112 that are opposite to each other, and the two edge beams 1111 and the two end beams 1112 form a frame-like structure. The upper flange 1113 is formed on the upper outer side of the edge beam 1111, and the lower flange 1114 is formed on the lower outer side of the edge beam 1111.

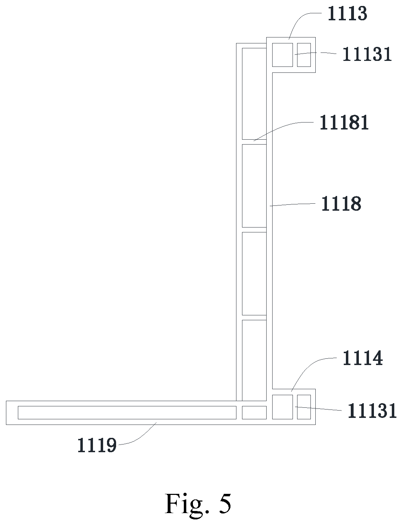

Please refer to Fig. 5, which shows the structure of the edge beam 1111 on the left side. The edge beam 1111 on the right side and the edge beam 1111 on the left side are mirror images of each other in terms of structure. The edge beam 1111 includes a vertical rib 1118 and a transverse rib 1119. The vertical rib 1118 and the transverse rib 1119 are vertically connected at the underside of the vertical rib 1118, and the transverse rib 1119 is located on the inner side of the vertical rib 1118. The upper flange 1113 and the lower flange 1114 are located on the outer side of the vertical rib 1118. The vertical rib 1118 is vertically connected to the transverse rib 1119, which can improve the anti-bending strength of the edge beam 1111 in the height direction and the left-right direction with a smaller weight and volume, thereby enhancing the overall strength of the frame 11, better protecting the battery module 12, and improving the stability and safety of the battery pack 100.

The cross-section of the vertical rib 1118 is in the shape of a frame, and there is a plurality of transverse reinforcement ribs 11181 in the space inside the frame. The transverse reinforcement ribs 11181 can improve the structural strength of the vertical rib 1118, especially the anti-bending strength along the left and right directions and enhance the overall strength of frame 11. Moreover, compared to solid structures, the vertical ribs 1118 with the frame shaped cross-sections are lighter in weight and can provide higher structural strength with lighter weight. The plurality of the transverse reinforcement ribs 11181 can be arranged side by side or at a certain angle.

The cross-section of the transverse rib 1119 is also in the shape of a frame. Compared to solid structures, the transverse ribs 1119 with the frame shaped cross-sections are lighter in weight and can provide higher structural strength with lighter weight. In some cases, a plurality of the reinforcing ribs can also be provided in the spaces inside the frames of the transverse ribs 1119 to enhance the structural strength.

The cross-sections of the upper flange 1113 and the lower flange 1114 are also in the shape of a frame, and the space inside the frame is provided with a vertical reinforcement rib 11131. The vertical reinforcing rib 11131 can improve the structural strength of the upper flange 1113 and the lower flange 1114, especially the anti-bending strength along the up-down direction (the vertical direction), which enhances the overall strength of the frame 11.

Please refer to Figs. 3 and 4 again. The edge frames 111 also include two anti-expansion beams 114. The battery module 12 includes a plurality of battery cells 121 arranged along the length direction X of the edge beams 1111. The anti-expansion beams 114 are provided on the inner sides of the end beams 1112 facing battery cells 121. The edge frame 111 is in the shape of a cuboid, and the plurality of battery cells 121 is arranged along the length direction X of the edge beams 1111. During long-term charge and discharge cycles, the battery cells 121 may experience a certain degree of expansion due to lithium insertion and extraction as well as gas production usw. The increasing expansion force can cause a structural deformation of the battery module 12 and even affect the normal use of the battery pack 100. Therefore, it is necessary to suppress the expansion of battery cells 121. The anti-expansion beams 114 are provided on the inner sides of the end beams 1112 facing the battery cells 121, that is, the anti-expansion beams 114 are located between the battery cells 121 and the end beams 1112. The expansion force generated when the battery cell 121 expands is borne by the anti-expansion beam 114, which can suppress the expansion of the battery cell 121, is beneficial for preventing excessive deformation of the frame 11 and avoiding faults or safety accidents caused by the expansion of the battery cell 121.

The cross-section of the anti-expansion beam 114 is also in the shape of a frame, and the space inside the frame is provided with a plurality of anti-expansion reinforcement ribs 1141. The anti-expansion reinforcement ribs 1141 are connected to both sides of the anti-expansion beam 114 along the front-back direction (the length direction X, that is, the expansion direction of the battery cell 121). The anti-expansion reinforcement ribs 1141 can improve the structural strength of the anti-expansion beam 114, especially the anti-bending strength along the front-back direction and enhance the ability to suppress the expansion of the battery cell 121. A plurality of anti-expansion reinforcement ribs 1141 can be arranged side by side or at a certain angle.

Similarly, the cross-section of the end beams 1112 can also be in the shape of a frame, and a plurality of reinforcing ribs is provided in the space inside the frame to enhance its structural strength.

In one embodiment, the edge beams 1111, the end beams 1112, and the anti-expansion beams 114 are all made of profiles. Profiles can be made of iron, aluminum, copper, and their alloys through processes such as rolling, extrusion, or casting, and their cross-sections have specific geometric shapes. The bottom plate 112, the edge beams 1111, the end beams 1112, and the anti-expansion beams 114 can all be made of extruded aluminum profiles. The connection method between the edge beams 1111 and the end beams 1112 can be screw connection, rivet connection or welded connection, and the welding process can be selected from FSW (Stationary shoulder FSW), CMT (cold metal transfer) and MIG (melt inert-gas welding).

In one embodiment, the single-layer module 10 further includes a sealing foam 115, which is laid on the top of the edge frame 111 and surrounds the battery module 12. The top of the edge frame 111 is correspondingly provided with a groove 1117 for accommodating the sealing foam 115, and the underside of the edge frame 111 of the upper single-layer module presses the sealing foam 115 of the lower single-layer module into the groove 1117 of the lower single-layer module. This can improve the sealing of the battery chamber 122, thereby protecting the battery module 12 inside. In some examples, the original thickness of the sealing foam 115 is 5 millimeters, and the depth of the groove 1117 is 2.5 millimeters. After being pressed by the edge frame 111 of the upper single-layer module, the thickness of the sealing foam 115 of the lower single-layer module inside the groove 1117 of the lower single-layer module is pressed to 2.5 millimeters.

The edge frame 111 is formed mainly by splicing two edge beams 1111 and two end beams 1112. Each of the edge beams 1111 and each of the end beams 1112 are provided with a corresponding groove 1117 for placing the sealing foam 115.

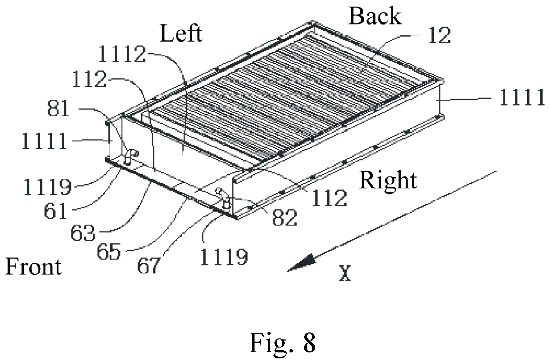

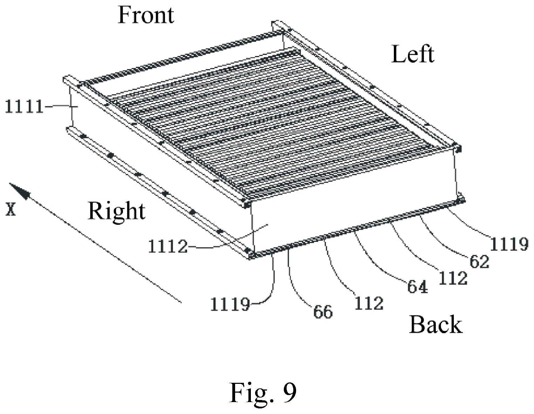

Please refer to Figs. 8 to 10. The following introduces the liquid cooling solution of the single-layer module 10.

The battery module 12 will generate heat and heat up during operation, and it is necessary to cool it down timely to prevent the performance of the battery module 12 from deteriorating or even causing safety accidents. The present embodiments use liquid cooling method to cool the battery module 12.

The embodiments illustrate four orientations of the single-layer module 10, including front, back, left and right. The introduction of the four orientations is only for the convenience of describing the technical solutions.

There are two bottom plates 112 between two transverse ribs 1119. A left transverse rib of the two transverse ribs 1119 is provided with a first coolant chamber 31, a left bottom plate of the two bottom plates 112 is provided with a second coolant chamber, a right bottom plate of the two bottom plates 112 is provided with a third coolant chamber, and a right transverse rib of the two transverse ribs 1119 is provided with a fourth coolant chamber 36. The first coolant chamber 31 is connected to the second coolant chamber, the second coolant chamber is connected to the third coolant chamber, and the third coolant chamber is connected to the fourth coolant chamber 36. The first coolant chamber 31, the second coolant chamber, the third coolant chamber, and the fourth coolant chamber 36 are all configured to store cooling liquid. As a result, the cooling liquid can flow in each coolant chamber, which can accelerate the cooling rate of the two transverse ribs 1119 and the two bottom plates 112, thereby improving the cooling efficiency of the battery module 12. In theory, each coolant chamber can be further subdivided into smaller coolant chambers. The cooling liquid can be the existing specialized cooling liquid for cooling the battery or can be water.

The left bottom plate 112 is provided with a first partition rib 41 extending along the length direction X of the edge beam 1111. The first partition rib 41 divides the second coolant chamber into a second left coolant chamber 32 and a second right coolant chamber 33, which are connected. The right bottom plate 112 is provided with a second partition rib 42 extending along the length direction X of the edge beam 1111. The second partition rib 42 divides the third coolant chamber into a third left coolant chamber 34 and a third right coolant chamber 35, which are connected. The advantage of subdividing the coolant chamber is to increase the flow path of the cooling liquid, thereby improving the cooling efficiency.

The first coolant chamber 31, the second left coolant chamber 32, the second right coolant chamber 33, the third left coolant chamber 34, the third right coolant chamber 35, and the fourth coolant chamber 36 are sequentially connected. Six coolant chambers are connected in sequence, which can increase the flow path of the cooling liquid and thus improve the cooling efficiency.

A first channel 51 connecting the first coolant chamber 31 and the second left coolant chamber 32 faces a back end of the frame 11, a second channel 52 connecting the second left coolant chamber 32 and the second right coolant chamber 33 faces a front end of the frame 11, a third channel 53 connecting the second right coolant chamber 33 and the third left coolant chamber 34 faces the back end of the frame 11, a fourth channel 54 connecting the third left coolant chamber 34 and the third right coolant chamber 35 faces the front end of the frame 11, and a fifth channel 55 connecting the third right coolant chamber 35 and the fourth coolant chamber 36 faces the back end of the frame 11. As a result, the six coolant chambers connected in series can achieve a serpentine circuit for the cooling liquid, improving the cooling efficiency.

In one embodiment, the frame 11 further includes a first sealing rib 61, a second sealing rib 62, a third sealing rib 63, a fourth sealing rib 64, a fifth sealing rib 65, a sixth sealing rib 66, and a seventh sealing rib 67. The first sealing rib 61 is connected to the left transverse rib 1119 and blocks the front end of the first coolant chamber 31, the second sealing rib 62 is connected to the left transverse rib 1119 and the left bottom plate 112 and blocks the back ends of the first coolant chamber 31 and the second left coolant chamber 32, the third sealing rib 63 is connected to the left bottom plate 112 and blocks the front ends of the second left coolant chamber 32 and the second right coolant chamber 33, and the fourth sealing rib 64 is connected to the two bottom plates 112 and blocks the back ends of the second right coolant chamber 33 and the third left coolant chamber 34, the fifth sealing rib 65 is connected to the right bottom plate 112 and blocks the front ends of the third left coolant chamber 34 and the third right coolant chamber 35, the sixth sealing rib 66 is connected to the right bottom plate 112 and the right transverse rib 1119 and blocks the back ends of the third right coolant chamber 35 and the fourth coolant chamber 36, and the seventh sealing rib 67 is connected to the right transverse rib 1119 and blocks the front end of the fourth coolant chamber 36. Thus, seven sealing ribs (front four, back three) can be used to seal the six coolant chambers. The sealing ribs can achieve the sealing through welding, interference fit of rubber plugs or adhesive bonding of rubber plugs.

Two edge beams 1111 and two bottom plates 112 protrude from an outer side of one of the end beams 1112 located at the front end of the frame 11 along the length direction X of the edge beam 1111, both the inlet port 81 and the outlet port 82 are located on the outer side of the end beam 1112, one of the inlet port 81 and the outlet port 82 is connected to the first coolant chamber 31, and another one of the inlet port 81 and the outlet port 82 is connected to the fourth coolant chamber 36. The inlet port 81 and the outlet port 82 can both have an elbow shape. The cooling liquid enters the first coolant chamber 31 through the inlet port 81, flows through the first coolant chamber 31, the second left coolant chamber 32, the second right coolant chamber 33, the third left coolant chamber 34, the third right coolant chamber 35, and the fourth coolant chamber 36 in sequence, forming a serpentine circuit, and finally flows out from the outlet port 82. The arrows inside each coolant chamber indicate the flow directions of the cooling liquid. Based on the liquid cooling solution, the battery module 12 has a very high cooling efficiency and can maintain good working performance and high safety.

In some examples, the single-layer module 10 can also adopt the existing CTP (CelltoPack) form.

The present embodiments provide a multi-layer stacked battery pack 100. The battery pack 100 is formed by stacking a plurality of single-layer modules 10 together. The single-layer modules 10 can be mainly made of profiles. The overall volume of the battery pack 100 is relatively small, and the battery pack 100 can store more electricity in a limited space and the types of structural components can be reduced, thus lowering the overall cost of the battery pack 100.

The advantages of the multi-layer stacked battery pack 100 provided in the embodiments are listed in detail below:
1. The single-layer module 10 fully utilizes the space to arrange the most battery cells 121, and the reinforced aluminum frame 11 replaces the frame in prior art, achieving a structural simplification;
2. In the stacking of a plurality of single-layer modules 10, the profile bottom plate 112 of the upper single-layer module 10 can serve as the cover of the lower single-layer module 10. Finally, the entire battery pack only has one upper cover 20, which reduces the number of upper covers 20 by three compared to prior art (if stacked in four layers), achieving a reduction in quantity and cost;
3. In prior art, the sealing of one battery pack is completed by one lower casing and one cover, and the connection between the two requires arranging M5 screws at an average spacing of 70-80 mm, with a general number of screws of about thirty-six. In the stacking of a plurality of single-layer modules 10 provided in the embodiments, except for the upper cover 20 on the top and the edge frame 111 which are riveted with approximately thirty-six blind rivets similar to M5 screws, among the other layers, the underside of the upper single-layer module can serve as the cover of the lower single-layer module, with good rigidity. The connecting screws 116 stacked between layers can be M6 screws and the number thereof can be reduced to 14, while ensuring mechanical connection strength;
4. The design of standard modules and the plurality of shared structural components (profiles) for each layer can reduce the variety of structural components and lower costs.

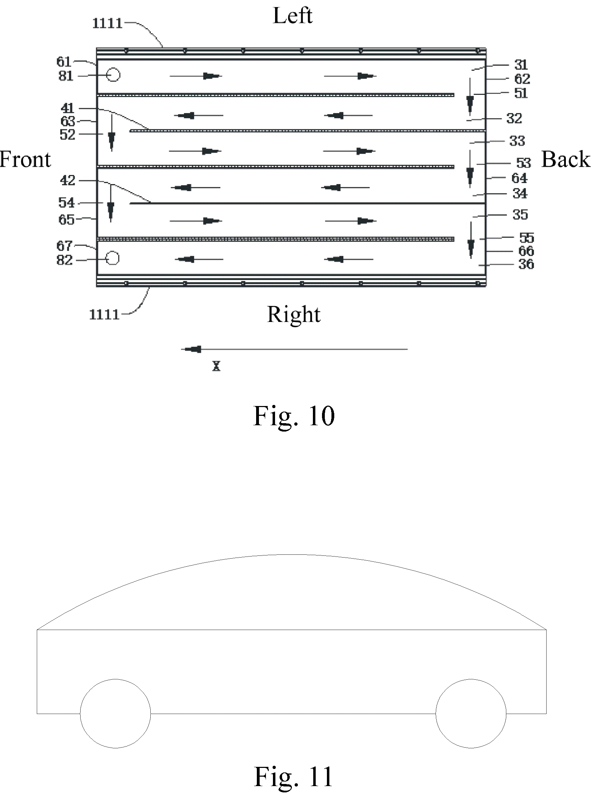

Please refer to Fig. 1 and Fig. 11. Fig. 11 is a structural schematic diagram of a vehicle according to some embodiments of the present disclosure.

The present disclosure also provides a vehicle, including the battery pack 100 mentioned above. Vehicles such as electric cars, electric bicycles, electric tricycles, etc. can be both motor vehicles and non-motor vehicles. The vehicle uses battery pack 100 as the power battery, and the battery pack 100 can provide a larger endurance with a smaller occupied space, improve the vehicle's space, and facilitate the vehicle's styling design.

## Claims

1. A multi-layer stacked battery pack comprising:
a plurality of single-layer modules, wherein each of the single-layer modules comprises a frame and a battery module, the frame comprises an edge frame and a bottom plate, the bottom plate is connected to an underside of the edge frame, and the edge frame and the bottom plate enclose a battery chamber for accommodating the battery module; and
an upper cover;
wherein the plurality of single-layer modules are stacked along a height direction, the bottom plate of an upper single-layer module of the single-layer modules is connected to the edge frame of a lower single-layer module of the single-layer modules, among adjacent two of the single-layer modules, to close the battery chamber formed by the lower single-layer module, and wherein the upper cover is connected to the edge frame of a top single-layer module of the single-layer modules.

2. The multi-layer stacked battery pack according to claim 1, wherein among the adjacent two single-layer modules, the frame of the upper single-layer module is detachably connected to the frame of the lower single-layer module, or the bottom plate of the upper single-layer module is detachably connected to the edge frame of the lower single-layer module.

3. The multi-layer stacked battery pack according to claim 1, wherein a lower part of the edge frame is provided with a lower flange, the lower flange is provided with a first mounting hole, and an upper part of the edge frame is provided with an upper flange, the upper flange is provided with a second mounting hole, wherein the first mounting hole is aligned with the second mounting hole.

4. The multi-layer stacked battery pack according to claim 3, further comprising a connector, wherein the connector passes through the first mounting hole of the edge frame of the upper single-layer module and is then connected to the second mounting hole of the edge frame of the lower single-layer module.

5. The multi-layer stacked battery pack according to claim 3, further comprising a connecting screw and a nut piece, wherein the connecting screw continuously passes through the first mounting hole of the edge frame of the upper single-layer module and the second mounting hole of the edge frame of the lower single-layer module and then is connected to the nut piece.

6. The multi-layer stacked battery pack according to claim 3, wherein the first mounting hole of the edge frame of a lowest single-layer module of the single-layer modules is further configured for a mounting screw connected to a mounting base to pass through.

7. The multi-layer stacked battery pack according to any one of claims 3 to 6, wherein the edge frame comprises two edge beams that are opposite to each other and two end beams that are opposite to each other, and the two edge beams and the two end beams form a frame-like structure.

8. The multi-layer stacked battery pack according to claim 7, wherein each of the edge beams comprises a vertical rib and a transverse rib, wherein the vertical rib and the transverse rib are vertically connected at lower part of the vertical rib, the transverse rib is located on inner side of the vertical rib, and the upper flange and the lower flange of the edge beam are located on outer side of the vertical rib.

9. The multi-layer stacked battery pack according to claim 8, wherein there are two bottom plates between two transverse ribs, a left transverse rib of the two transverse ribs is provided with a first coolant chamber, a left bottom plate of the two bottom plates is provided with a second coolant chamber, a right bottom plate of the two bottom plates is provided with a third coolant chamber, and a right transverse rib of the two transverse ribs is provided with a fourth coolant chamber, the first coolant chamber is connected to the second coolant chamber, the second coolant chamber is connected to the third coolant chamber, the third coolant chamber is connected to the fourth coolant chamber, the first coolant chamber, the second coolant chamber, the third coolant chamber and the fourth coolant chamber are all configured for storing cooling liquid.

10. The multi-layer stacked battery pack according to claim 9, wherein each of or a combination of the left and right bottom plates is provided with a partition rib, and the left bottom plate is provided with a first partition rib extending along a length direction of the edge beam, the first partition rib divides the second coolant chamber into a second left coolant chamber and a second right coolant chamber, and the second left coolant chamber and the second right coolant chamber are connected; and
the right bottom plate is provided with a second partition rib extending along the length direction of the edge beam, the second partition rib divides the third coolant chamber into a third left coolant chamber and a third right coolant chamber, and the third left coolant chamber and the third right coolant chamber are connected.

11. The multi-layer stacked battery pack according to claim 10, wherein the first coolant chamber, the second left coolant chamber, the second right coolant chamber, the third left coolant chamber, the third right coolant chamber, and the fourth coolant chamber are sequentially connected.

12. The multi-layer stacked battery pack according to claim 11, wherein a first channel connecting the first coolant chamber and the second left coolant chamber faces a back end of the frame, a second channel connecting the second left coolant chamber and the second right coolant chamber faces a front end of the frame, a third channel connecting the second right coolant chamber and the third left coolant chamber faces the back end of the frame, and a fourth channel connecting the third left coolant chamber and the third right coolant chamber faces the front end of the frame, and a fifth channel connecting the third right coolant chamber and the fourth coolant chamber faces the back end of the frame.

13. The multi-layer stacked battery pack according to claim 12, wherein the frame further comprises a first sealing rib, a second sealing rib, a third sealing rib, a fourth sealing rib, a fifth sealing rib, a sixth sealing rib and a seventh sealing rib, wherein the first sealing rib is connected to the left transverse rib and blocks a front end of the first coolant chamber, the second sealing rib is connected to the left transverse rib and the left bottom plate and blocks the back ends of the first coolant chamber and the second left coolant chamber, the third sealing rib is connected to the bottom plate on the left and blocks the front ends of the second left coolant chamber and the second right coolant chamber, the fourth sealing rib is connected to the two bottom plates and blocks the back ends of the second right coolant chamber and the third left coolant chamber, the fifth sealing rib is connected to the right bottom plate and blocks the front ends of the third left coolant chamber and the third right coolant chamber, the sixth sealing rib is connected to the right bottom plate and the right transverse rib and blocks the back ends of the third right coolant chamber and the fourth coolant chamber, and the seventh sealing rib is connected to the right transverse rib and blocks the front end of the fourth coolant chamber.

14. n outlet port, wherein the two edge beams and the two bottom plates protrude from an outer side of an end beam at the front end of the frame of the end beams along the length direction of the edge beam, both the inlet port and the outlet port are located on the outer side of the end beam, one of the inlet port and the outlet port is connected to the first coolant chamber, and another one of the inlet port and the outlet port is connected to the fourth coolant chamber.

15. The multi-layer stacked battery pack according to claim 7, wherein the edge frames further comprise two anti-expansion beams, the battery module comprises a plurality of battery cells arranged along the length direction of the edge beams, and the anti-expansion beams are arranged on inner sides of the end beams facing the battery cells.

16. The multi-layer stacked battery pack according to claim 15, wherein the edge beams, the end beams and the anti-expansion beams are all made of profiles.

17. The multi-layer stacked battery pack according to any one of claims 1 to 6, wherein the single-layer module further comprises sealing foam, the sealing foam is laid on top of the edge frame and surrounds the battery module.

18. The multi-layer stacked battery pack according to claim 17, wherein the top of the edge frame is correspondingly provided with a groove for accommodating the sealing foam, and the underside of the edge frame of the upper single-layer module presses the sealing foam of the lower single-layer module into the groove of the lower single-layer module.

19. A vehicle comprising the multi-layer stacked battery pack as claimed in any one of claims 1 to 18.
